# EUROPÄISCHE PATENTANMELDUNG

(11) **EP 2 269 463 A2**
(43) Veröffentlichungstag der Anmeldung: **05.01.2011**
(21) Anmeldenummer: 10164159.5
(22) Anmeldetag: 27.05.2010
(51) Int. Cl.: A21B 3/04, A21C 13/00

(54) **Vorrichtung zur Behandlung von Lebensmitteln**

(30) Priorität: 27.05.2009 DE 102009026500
(71) Anmelder: MIWE Michael Wenz GmbH, 97450 Arnstein (DE)
(72) Erfinder: Heid, Andreas, 97222, Gramschatz (DE)
(74) Vertreter: Patentanwälte Freischem

(57) **Zusammenfassung**

Die Erfindung betrifft eine Vorrichtung zur Behandlung von Lebensmitteln sowie ein Verfahren zum Betreiben einer solchen Vorrichtung. Um eine kostengünstige alternative Möglichkeit zur Verteilung von Flüssigkeiten in Vorrichtungen zur Behandlung von Lebensmitteln zur Verfügung zu stellen, umfasst eine erfindungsgemäße Vorrichtung (100) eine mindestens teilweise im Innenraum der Vorrichtung (100) angeordnete Rotationsvorrichtung (104) mit einem Zerstäubungselement zur mechanischen Zerstäubung von Wasser. Dabei ist das Zerstäubungselement derart ausgebildet, dass dem Zerstäubungselement zugeführte Flüssigkeit aufgrund der Rotation des Zerstäubungselements mechanisch zerstäubt wird. Die gewünschte Zerstäubung ist durch die Wahl einer adäquaten Drehgeschwindigkeit des Zerstäubungselements einstellbar.

## Beschreibung

Die Erfindung betrifft eine Vorrichtung zur Behandlung von Lebensmitteln sowie ein Verfahren zum Betreiben einer solchen Vorrichtung.

Unter einer Vorrichtung zur Behandlung von Lebensmitteln im Sinne der Erfindung werden im Rahmen der vorliegenden Anmeldung insbesondere Backöfen, Back- und Gärstraßen, Gärschränke und Dampfgarer verstanden. Der Begriff Behandlung ist weit auszulegen. Vorrichtungen zur Behandlung von Lebensmitteln im Sinne der Erfindung umfassen daher insbesondere auch sämtliche Anlagen zur Lebensmittelherstellung, wie z.B. Teigknetmaschinen.

In der Bäckereitechnik werden von den vorstehend genannten Vorrichtungen insbesondere Gärschränke, Backöfen, Back- und Gärstraßen eingesetzt. Gärschränke und Gärstraßen dienen dazu, den Gärvorgang von Backwaren zu beeinflussen. Dazu werden insbesondere die Temperatur und die Luftfeuchtigkeit geregelt. In allen genannten Vorrichtungen kommen Systeme zum Einsatz, bei denen es darauf ankommt, eine Flüssigkeit, insbesondere Wasser, sehr fein im Innenraum der Vorrichtung bzw. auf dem Lebensmittel selbst zu verteilen.

Bei bekannten Gärschränken beispielsweise wird die Luftfeuchtigkeit häufig durch so genannte Dampfzylindersysteme beeinflusst. Diese umfassen einen Dampfzylinder, eine Heizvorrichtung und einen Lüfter. Zur Erhöhung der Luftfeuchtigkeit wird Wasser zunächst aufgeheizt und verdampft. Das verdampfte, in feinen Tröpfchen vorliegende Wasser wird dann über einen Ventilator dem Innenraum des Gärschranks zugeführt. Die Dampfzylindersysteme benötigen nicht nur viel Energie (die benötigte Leistung für die Dampferzeugung liegt üblicherweise bei ca. 1500 Watt oder höher), sondern erzeugen auch relativ große Wassertropfen mit einer mittleren Größe von ca. 100 bis 150 µm. Diese relativ großen Wassertropfen dringen nur schwer in die Backwaren ein. Weitere Nachteile der Dampfzylindersysteme sind der relativ große Bauraumbedarf sowie eine Aufheizzeit von mehreren Minuten, bevor das Dampfzylindersystem einsatzbereit ist.

Aus AT 389 210 B ist eine Vorrichtung zum Besprühen von Backwaren mit Hilfe von Sprühdüsen bekannt. Aus DE 10 2006 046 658 A1 ist es ferner bekannt, Wassertropfen für Gärschränke mit Hilfe von Ultraschallzerstäubern zu erzeugen. Mit solchen Vorrichtungen erzeugte Wassertropfen weisen gemäß der genannten Offenlegungsschrift eine Größe von 1 bis 10 µm auf.

Der Erfindung liegt die Aufgabe zugrunde, eine kostengünstige alternative Möglichkeit zur feinen Verteilung von Flüssigkeiten in Vorrichtungen zur Behandlung von Lebensmitteln zu schaffen. in Gärschränken zur Verfügung zu stellen.

Die Lösung der Aufgabe erfolgt erfindungsgemäß mit den Merkmalen der Ansprüche 1 und 10.

Eine erfindungsgemäße Vorrichtung zur Behandlung von Lebensmitteln umfasst eine mindestens teilweise im Innenraum der Vorrichtung angeordnete Rotationsvorrichtung mit einem Zerstäubungselement zur mechanischen Zerstäubung von Wasser, wobei das Zerstäubungselement derart ausgebildet ist, dass dem Zerstäubungselement zugeführtes Wasser aufgrund der Rotation des Zerstäubungselements mechanisch zerstäubt wird und die gewünschte Zerstäubung durch die Wahl einer adäquaten Drehgeschwindigkeit des Zerstäubungselements vorgebbar ist. Unter "mindestens teilweise im Innenraum der Vorrichtung" wird verstanden, dass das Zerstäubungselement derart in oder an der Vorrichtung angeordnet ist, dass die von ihr zu verteilende Feuchtigkeit in den Innenraum einbringbar ist. Dies kann dadurch geschehen, dass das Zerstäubungselement vollständig im Innenraum angeordnet ist. Es kann jedoch auch dadurch erfolgen, dass das Zerstäubungselement derart in einer Nische oder Öffnung des Innenraums angeordnet ist, dass die von dem Zerstäubungselement zerstäubte Flüssigkeit zumindest teilweise in den Innenraum einbringbar ist. Die Erfindung hat den Vorteil, dass die Befeuchtung des Innenraums der Vorrichtung auf sehr einfache und kostengünstige Weise durch bloße Flüssigkeitszufuhr und Rotation des Zerstäubungselementes erfolgt. Da es dazu lediglich erforderlich ist, die zu zerstäubende Flüssigkeit zuzuführen und das Zerstäubungselement auf eine für die gewünschte Zerstäubung adäquate Drehgeschwindigkeit zu beschleunigen, ist die Rotationsvorrichtung bereits nach kurzer Zeit betriebsbereit. Mit dem Zerstäubungselement können Flüssigkeiten daher im Wesentlichen ohne zeitlichen Vorlauf in den Innenraum der Vorrichtung eingebracht werden. Sofern als Flüssigkeit Wasser verwendet wird, um die Luftfeuchtigkeit zu erhöhen, können Luftfeuchtigkeitsdefizite so kurzfristig ausgeglichen werden. Auch der Energiebedarf der erfindungsgemäßen Vorrichtung ist sehr gering, da im Wesentlichen lediglich Antriebsenergie für die Rotationsvorrichtung erforderlich ist. Eine energieaufwändige Vernebelung der Flüssigkeit wie bei den bekannten Dampfzylindern ist nicht erforderlich. Ebenfalls zu erwähnen ist, dass die Rotationsvorrichtung gegenüber bekannten Vorrichtungen, insbesondere gegenüber Gärschränken mit Dampfzylindern, einen nur sehr geringen Bauraum benötigt. Für die Flüssigkeitseinbringung ist im Wesentlichen nur das Zerstäubungselement erforderlich. Wasserzufuhr, Antrieb etc. können außerhalb des Gärraums auf der Außenseite der Rückwand der Vorrichtung angeordnet werden. Das gleiche gilt sinngemäß für andere Vorrichtungen zur Behandlung von Lebensmitteln, insbesondere für Backöfen und Backstraßen, bei denen zur Befeuchtung in der Regel Schwadenapparate eingesetzt werden, die mehr Bauraum beanspruchen als das Zerstäubungselement mit den dazugehörigen Anbauteilen. Mit Flüssigkeiten im Sinne der Erfindung ist zwar insbesondere Wasser gemeint, welches beispielsweise in Gärschränken oder Backöfen zur Beeinflussung der Luftfeuchtigkeit eingesetzt wird. Anstelle von Wasser können aber auch andere Flüssigkeiten verwendet werden, um andere Ziele zu erreichen.

Beispielsweise kann statt Wasser auch Seifenlauge oder ein Reinigungsmittel eingesetzt werden, um die Rotationsvorrichtung zur Verteilung von Reinigungsmittel innerhalb einer erfindungsgemäßen Vorrichtung zu verwenden. Dies hat den Vorteil, dass das Reinigungsmittel sehr gut innerhalb der Vorrichtung verteilbar ist. Dadurch wird das Risiko minimiert, dass die Vorrichtung aufgrund einer anfänglichen Konzentration einer größeren Menge Reinigungsmittel an einer Stelle im Innenraum beschädigt wird. Durch die feine Zerstäubung des Reinigungsmittels mit Hilfe der Rotationsvorrichtung kann dieses besonders gut in enge Spalten der Vorrichtung eindringen und ermöglich so eine gründliche Reinigung.

Ebenso kann die Rotationsvorrichtung zur feinen Zerstäubung von Fett verwendet werden, um Backbleche einzufetten und für diese für die nachfolgende Bestückung mit Backwaren vorzubereiten.

Die vorstehenden Beispiele verdeutlichen, dass eine erfindungsgemäße Vorrichtung unabhängig von in der Vorrichtung enthaltenen Lebensmitteln Anwendung finden kann, beispielsweise zur Reinigung, Vor- oder Nachbereitung einer Vorrichtung aus dem Lebensmittelsektor.

In einer praktischen Ausführungsform der Erfindung ist die Rotationsvorrichtung als Ganzes - unabhängig von der Rotationsbewegung des Zerstäubungselements - innerhalb der Vorrichtung beweglich gelagert. Eine bewegliche Lagerung kann beispielsweise dadurch erfolgen, dass die Rotationsvorrichtung innerhalb der erfindungsgemäßen Vorrichtung oszillieren kann, sie schwenkbar gelagert ist und/oder translatorisch beweglich gelagert ist. Eine translatorische Lagerung ist beispielsweise über Führungsschienen möglich. Die bewegliche Lagerung hat den Vorteil, dass die zu zerstäubende Flüssigkeit auch unabhängig von etwaig vorhandenen zusätzlichen Ventilationsvorrichtungen im gesamten Innenraum verteilbar ist.

Rotationssymmetrische Zerstäubungselemente haben den Vorteil, dass sich durch deren Rotation eine nur sehr geringe Lagerbelastung ergibt. Solche Zerstäubungselemente sind daher besonders langlebig und können darüber hinaus relativ kostengünstig hergestellt werden, da trotz hoher Drehgeschwindigkeiten eine relativ einfache Lagerung gewählt werden kann.

In einer praktischen Ausführungsform ist das Zerstäubungselement ein glockenförmig ausgebildeter, rotierbar angeordneter Zerstäuberteller. Ein solcher Zerstäuberteller eignet sich besonders für die mechanische Zerstäubung, da die aufgebrachte Flüssigkeit mit diesem gleichmäßig radial verteilbar ist. Vorzugsweise ist der Zerstäuberteller rotationssymmetrisch ausgebildet. Wie bereits erwähnt, kann in diesem Fall kann die Lagerung des Zerstäubertellers besonders klein dimensioniert werden, da Unwuchten ausschließlich durch Fertigungs- oder Montageungenauigkeiten bzw. durch Abnutzung oder Beschädigung der Rotationsvorrichtung auftreten.

Statt eines glockenförmigen Zerstäubertellers kann in besonders einfacher Ausführungsform auch ein Zerstäuberteller mit mindestens einer, im Wesentlichen ebenen Oberfläche verwendet werden. Auf einen solchen Zerstäuberteller kann beispielsweise im Bereich der Rotationsachse eine Flüssigkeit aufgebracht werden, die dann durch die Rotation - wie bei dem glockenförmig ausgebildeten Zerstäuberteller - radial nach außen strömt, bis sie sich von den Teller ablöst und fein zerstäubt wird.

Der Antrieb des Zerstäubungselements kann beispielsweise direkt über einen Motor, insbesondere einen Elektromotor, erfolgen. Ein solcher Motor kann beispielsweise rückseitig im Bereich der Rotationsachse des Zerstäubungselements an diesem angreifen. Zur Übertragung des für den Antrieb des Zerstäubungselements erforderlichen Drehmoments kann eine Vollwelle eingesetzt werden. In diesem Fall erfolgt die Flüssigkeitszufuhr zu dem Zerstäubungselement vorzugsweise von der Vorderseite her über eine separate Zufuhreinrichtung, welche die Flüssigkeit auf der Vorderseite im Wesentlichen zentral auf das Zerstäubungselement aufbringt.

Alternativ kann der Antrieb über eine Hohlwelle erfolgen. Im Bereich der Rotationsachse kann dann eine Öffnung für eine Flüssigkeitsdurchführung vorgesehen sein, um dem Zerstäubungselement Flüssigkeit von dessen Rückseite aus zuführen zu können. Eine derartige zentrale Wasserzufuhr hat den weiteren Vorteil, dass das zu zerstäubende Wasser im Bereich der Drehachse von der Rückseite zentral auf dem Zerstäuberteller aufgebracht wird. Es wird auch in diesem Fall im Wesentlichen gleichmäßig radial verteilt und zerstäubt.

Vorzugsweise weist die Rotationsvorrichtung eine separate Drehdurchführung mit einem ersten Kupplungsbereich zum Anschluss einer externen Wasserleitung und einem zweiten Kupplungsbereich zum Anschluss der Flüssigkeitsdurchführung auf. Die Drehdurchführung dient dazu, eine Anschlussmöglichkeit für nicht drehbare Standardanschlusselemente zu schaffen, beispielsweise für einen Wasserschlauch. Der Wasserschlauch kann über den ersten Kupplungsbereich auf einfache Art und Weise mit der Drehdurchführung verbunden werden (z.B. durch Aufstecken). Der zweite Kupplungsbereich dient dazu, das Wasser sicher von dem Wasserschlauch in eine rotierbare Flüssigkeitsdurchführung einzuleiten, um es anschließend zu einem Zerstäubungselement, beispielsweise zu einem Zerstäuberteller, weiterzuleiten.

Die Abdichtung der Drehdurchführung erfolgt vorzugsweise dadurch, dass diese mindestens eines, vorzugsweise alle, der folgenden Merkmale aufweist:
a) eine Spaltdichtung,
b) eine radiale Durchmesserdifferenz gegenüber der Flüssigkeitsdurchführung,
c) eine archimedische Schnecke.

Unter einer Spaltdichtung wird insbesondere der passgenaue Sitz einer Hülse angesehen, welcher das Eindringen von Wasser im Wesentlichen aufgrund eines sehr engen Spalts verhindert.

Unter einer radialen Durchmesserdifferenz gegenüber der Flüssigkeitsdurchführung wird verstanden, dass der Innendurchmesser der Flüssigkeitsdurchführung und der Innendurchmesser eines an diese angrenzenden Elements der Drehdurchführung verschieden groß sind, so dass ein Zurückfließen der Flüssigkeit von der Flüssigkeitsdurchführung in die Drehdurchführung auch aufgrund der Durchmesserdifferenz (Stufe) verhindert wird.

Unter einer archimedischen Schnecke wird jede geometrische Struktur verstanden, die im Betrieb der Rotationsvorrichtung eine Rückförderung von etwaiger teilweise in die Drehführung eingedrungener Flüssigkeit bewirkt. Dies kann insbesondere durch die wendelförmige Einkerbung einer zylinderförmigen Wandung sein, welche bewirkt, dass in die Einkerbung gelangende Flüssigkeit wendelförmig in die Förderrichtung des Wassers gefördert wird, wenn ein diese Wandung umgebender Körper, z.B. eine Hülse, rotiert.

In einer weiteren praktischen Ausführungsform umfasst die Rotationsvorrichtung ein antreibbares Element, insbesondere eine Riemenscheibe. In diesem Fall ist die Rotationsvorrichtung, beispielsweise über einen Riemen, von einem abseits der Vorrichtung verbauten Motor antreibbar. Dies schafft große Freiheiten bezüglich der baulichen Gestaltung der Rotationsvorrichtung. Selbstverständlich können auch andere Antriebe, insbesondere Reibradantriebe oder Direktantriebe zum Antrieb des Zerstäubungselements eingesetzt werden.

In einer weiteren praktischen Ausführungsform ist die Rotationsvorrichtung mit einer Gehäusewand der Vorrichtung formschlüssig, kraftschlüssig oder stoffschlüssig verbunden. Insbesondere wenn für die Rotationsvorrichtung Frischwasser von einer externen Leitung verwendet wird, bietet es sich an, die Rotationsvorrichtung teilweise innerhalb, teilweise außerhalb des Gehäuses anzuordnen. Es genügt, wenn sich das Zerstäubungselement innerhalb der Vorrichtung befindet. Alle übrigen Elemente können aus Platzgründen auch auf der Außenseite der Vorrichtung befestigt sein. Die Verwendung von Frischwasser hat den Vorteil, dass sich keine Algen, Bakterien oder Schlämme im Bereich der erfindungsgemäßen Vorrichtung ansammeln können, welche die zu behandelnden Lebensmittel negativ beeinträchtigen könnten. Dies gilt insbesondere für Vorrichtungen aus der Bäckereitechnik wie Gärschränke, Backöfen sowie Back- und Gärstraßen.

Wenn das Zerstäubungselement auf der Innenseite der Vorrichtung nahe der Rückwand derart angeordnet ist, dass dessen Rotationsachse horizontal verläuft, bildet sich ein im Wesentlichen vertikaler Nebelvorhang aus. Ein solcher Nebelvorhang kann mit Hilfe von einem oder mehreren Ventilatoren sehr gut im Innenraum der Vorrichtung verteilt werden, um die Luftfeuchtigkeit gleichmäßig zu erhöhen.

Gemäß einem erfindungsgemäßen Verfahren, für welches unabhängig Schutz beansprucht wird, werden die Drehgeschwindigkeit des Zerstäubungselements, die Temperatur in der Vorrichtung und die Wasserzufuhr so eingestellt, dass die mit der Rotationsvorrichtung erzeugte mittlere Tröpfchengröße 20 bis 40 µm, insbesondere 25 bis 35µm beträgt. Diese Tröpfchengröße hat sich als besonders vorteilhaft für die Behandlung von Backwaren, insbesondere in Gärschränken und Gärstraßen, erwiesen. Insbesondere hat sich herausgestellt, dass die Eindringtiefe bei dieser Tröpfchengröße es ermöglicht, die Wärmeleitfähigkeit zu verbessern. Dadurch kann die Gärtemperatur abgesenkt werden, wodurch zusätzliche Energie eingespart wird.

Weitere vorteilhafte Ausgestaltungen der Erfindung sind in den nachfolgenden Figurenbeschreibungen im Zusammenhang mit den Zeichnungen beschrieben. Es zeigen:
- Fig. 1: einen Ausschnitt eines Gärschranks mit einer Rotations- vorrichtung
- Fig. 2: eine vergrößerte Darstellung wichtiger Elemente der in Figur 1 gezeigten Rotationsvorrichtung.
- Fig. 3: die Rückwand eines Gärschrankes mit Abdeckungen in einer Ansicht von vorne,
- Fig. 4: die in Figur 3 gezeigte Rückwand ohne Abdeckungen in einer Ansicht von vorne,
- Fig. 5: die in Figur 3 gezeigte Rückwand mit Abdeckungen in einer Seitenansicht,
- Fig. 6: die in Figur 3 gezeigte Rückwand ohne Abdeckungen in einer Seitenansicht,
- Fig. 7 -11: verschiedene Geometrien von Zerstäubungselementen jeweils in einer Seitenansicht (obere Darstellung) und ei- ner Ansicht von oben (untere Darstellung) und
- Fig. 12: eine schematische Darstellung eines Zerstäubungsele- ments mit einer Zufuhreinrichtung zur Versorgung des Zer- stäubungselements mit Flüssigkeit von der Vorderseite aus.

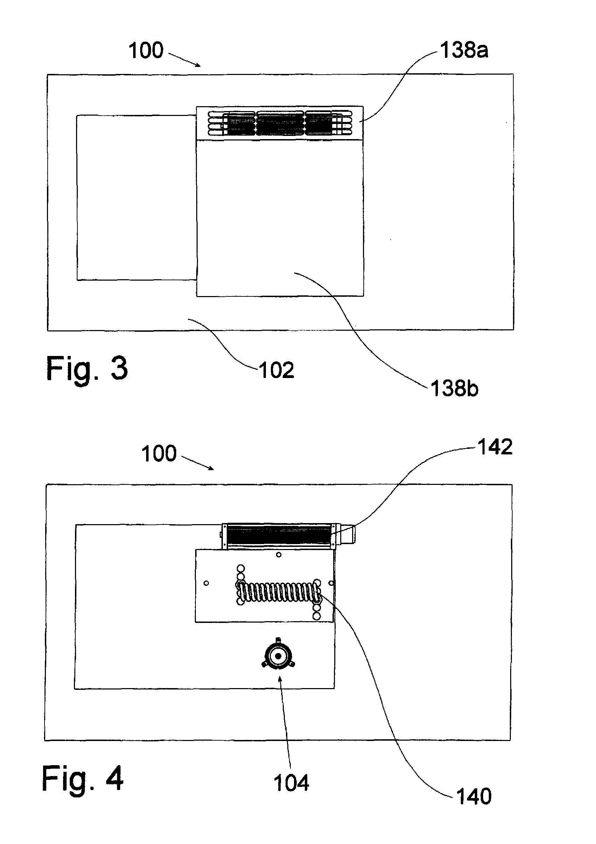

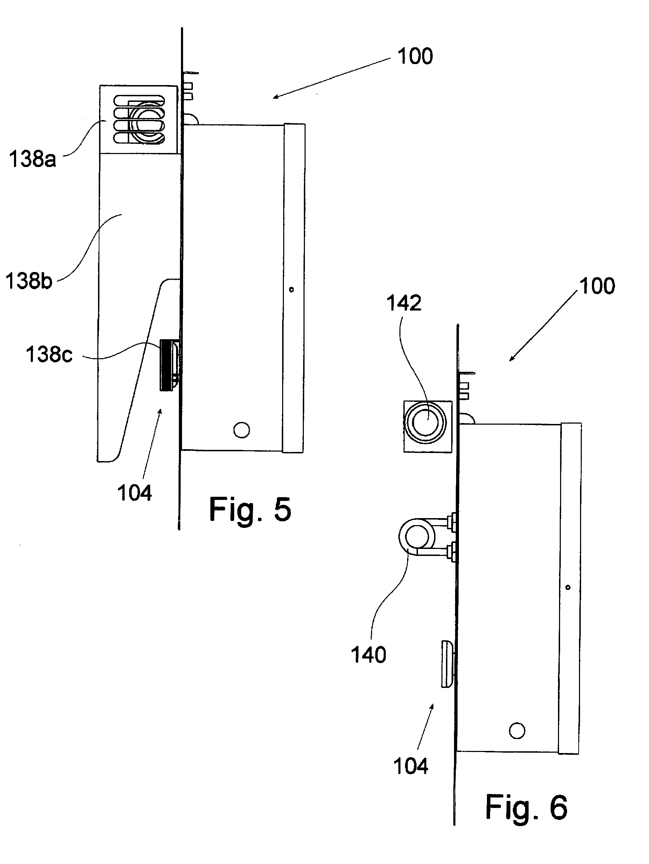

Die Figuren 3 bis 6 zeigen die Rückwand 102 einer erfindungsgemäßen Vorrichtung 100 in Form eines Gärschranks in zwei Vorderansichten und zwei Seitenansichten. Die jeweils erste Ansicht (Figuren 3 und 5) zeigt den Gärschrank mit Abdeckungen 138a, 138b, die jeweils zweite Ansicht (Figuren 4 und 6) zeigt den Gärschrank ohne diese Abdeckungen 138.

Wie in den Figuren gezeigt, befinden sich im Bereich der Rückwand des in dem Ausführungsbeispiel gezeigten erfindungsgemäßen Gärschranks eine nur teilweise sichtbare Rotationsvorrichtung 104, eine Heizspirale 140 sowie ein Querstromgebläse 142. Die Heizspirale dient der Regelung der Temperatur, die Rotationsvorrichtung 104 der Regelung der Luftfeuchtigkeit und das Querstromgebläse 142 der gleichmäßigen Verteilung der durch die vorstehend genannten Vorrichtungen beeinflussten Luft.

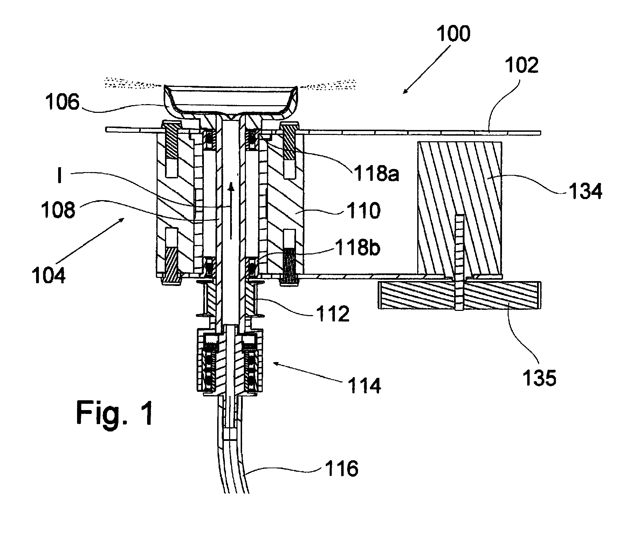

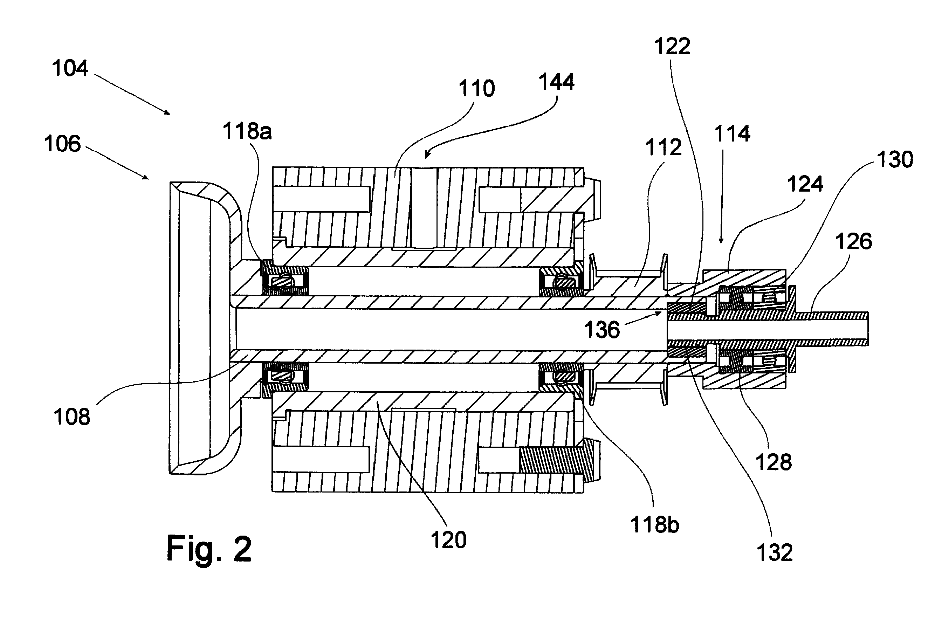

Nachfolgend wird die Rotationsvorrichtung 104 der erfindungsgemäßen Vorrichtung 100 sowie deren Funktionsweise anhand eines Gärschranks beschrieben, der in den Figuren 1 und 2 dargestellt ist.

Figur 1 zeigt die Rückwand 102 des im Ausführungsbeispiel dargestellten Gärschranks sowie die damit verschraubte Rotationsvorrichtung 104. Die Rotationsvorrichtung 104, welche in Figur 2 als Detaildarstellung dargestellt ist, umfasst als Zerstäubungselement einen glockenförmig ausgebildeten, rotationssymmetrischen Zerstäuberteller 106, eine drehfest mit dem Zerstäuberteller 106 verbundene Hohlwelle 108, welche als Flüssigkeitsdurchführung dient, ein Gehäuse 110 zur Lagerung der Hohlwelle 108, eine mit der Hohlwelle 108 drehfest verbundene Riemenscheibe 112 zum Antrieb derselben sowie eine Drehdurchführung 114. Die Drehdurchführung 114 ermöglicht die Verbindung eines nicht rotierenden Standardelements, z.B. eines handelsüblichen Wasserschlauchs 116 (siehe Fig. 1), mit der rotierenden Hohlwelle 108. Das in dem Ausführungsbeispiel gezeigte Gehäuse ist aus einem Aluminiumwerkstoff, insbesondere aus AlCuMgPb F37, gefertigt.

Bei der in den Figuren 1 und 2 gezeigten Rotationsvorrichtung 104 wurde hinsichtlich der Hohlwelle 108 eine Funktionstrennung für Lagerung und Abdichtung vorgenommen.

Die Lagerung erfolgt über zwei innerhalb des Gehäuses 110 angeordnete Wälzlager 118a, 118b, welche sich an einer in das Gehäuse 110 eingesetzten ersten Bundbuchse 120 abstützen. Die erste Bundbuchse 120 ist aus 1.4104 hergestellt. Sie ist lösbar über eine nicht dargestellte Schraube, insbesondere eine Madenschraube, fixiert, welche in eine seitliche Öffnung 144 des Gehäuses 110 eingeschraubt ist.

Die Abdichtung erfolgt im Wesentlichen über eine im Bereich der Drehdurchführung 114 sitzende Dichtbuchse 122.

Die Drehdurchführung 114 besteht im Wesentlichen aus einer auf die Hohlwelle 108 aufgeschobenen zweiten Bundbuchse 124, einem in die zweite Bundbuchse 124 hineinragenden Bundbolzen 126 sowie zwischen der zweiten Bundbuchse 124 und dem Bundbolzen angeordneten Lagerelementen 128, 130. Zwischen dem Bundbolzen 126 und der Hohlwelle 108 sitzt die vorstehend erwähnte Dichtbuchse 122. Zur Verbesserung der Dichtwirkung der Dichtbuchse gegenüber den angrenzenden Lagerelementen 128, 130 weist der Bundbolzen 126 im Bereich des Dichtsitzes eine wendelförmige Einkerbung 132 auf. Dies führt dazu, dass etwaige in die Einkerbung gelangende Flüssigkeit aufgrund der Drehbewegung der Hohlwelle in der Einkerbung wendelförmig in Richtung Zerstäuberteller 106 gefördert wird. Bundbolzen 126 und Hohlwelle 108 arbeiten daher nach dem Prinzip einer archimedischen Schnecke. Da der Bundbolzen 126 einen kleineren Innendurchmesser aufweist als der Innendurchmesser der Hohlwelle, ist im Bereich der Angrenzung der Drehdurchführung 114 an die der Flüssigkeitsdurchführung dienenden Hohlwelle 108 eine Stufe 136 ausgebildet. Diese Stufe dient - neben der Spaltdichtung und der archimedischen Schnecke - ebenfalls der Abdichtung der Hohlwelle 108 gegenüber der Drehdurchführung 114.

Alle auf der Hohlwelle 108 sitzenden Elemente der Rotationsvorrichtung 104 sind in der gezeigten Ausführungsform unter einer gewissen Vorspannung mit der Hohlwelle 108 verklebt. Dies sind insbesondere der Zerstäuberteller 106, die Wälzlager 118, die Riemenscheibe 112 sowie die zweite Bundbuchse 124. Dies hat den Vorteil, dass zur Montage keine Federscheiben erforderlich sind und kein Anzugsdrehmoment berücksichtigt werden muss.

Ein Auswechseln der Hohlwelle 108 sowie der mit der Hohlwelle 108 verbundenen Elemente kann durch einfaches Lösen der in der seitlichen Öffnung 144 sitzenden Schraube (nicht gezeigt), Abnehmen des Riemens (nicht dargestellt) und Herausziehen der Hohlwelle 108 von rechts nach links (Fig. 2) erfolgen. Dabei wird auch die erste Bundbuchse 120 demontiert. Vorteilhaft an dieser Möglichkeit ist, dass beim Auswechseln das Gehäuse 110 fest mit dem Gehäuse des Gärschranks verbunden bleiben kann. Dadurch ergibt sich ein nur geringer Aufwand für Wartung und Instandhaltung des Gärschranks.

Selbstverständlich ist es auch möglich, einzelne oder alle Elemente der Rotationsvorrichtung 104 lösbar mit der Hohlwelle 108 zu verbinden, um diese jederzeit und zerstörungsfrei wieder lösen zu können.

Die Rotationsvorrichtung des Gärschranks kann wie folgt eingesetzt werden. Beim Starten eines Gärprozesses werden Sollwerte für die relative Feuchte und die Temperatur eingestellt. Die Temperatur in Gärschränken beträgt meist zwischen 25 und 40 °C, vorzugsweise zwischen 30 und 32 °C. Die angestrebte relative Feuchte liegt insbesondere bei 75 bis 90 %. Über Sensoren (nicht dargestellt) werden die Abweichungen der Ist- von den Sollwerten erfasst. Fällt die relative Feuchte auf einen Wert unterhalb des Sollwertes ab, wird ein Elektromotor 134 mit Spannung versorgt, läuft an und treibt über eine antreibende Riemenscheibe 135 und einen Riemen (nicht gezeigt) die mit der Hohlwelle 108 drehfest verbundene abtriebseitige Riemenscheibe 112 und somit den Zerstäuberteller 106 an. Der Elektromotor im Ausführungsbeispiel wird mit einer Spannung von 24 V betrieben. Nach einer kurzen Einlaufphase, während der die Solldrehzahl erreicht ist, wird ein Magnetventil (nicht dargestellt) betätigt und somit die Wasserzufuhr geöffnet. Dadurch gelangt ein definierter Wasservolumenstrom über die Drehdurchführung 114 in die Hohlwelle 108 und weiter in Richtung des Pfeiles I auf den Zerstäuberteller 106. Auf dem Zerstäuberteller 106 bildet sich dadurch ein Wasserfilm aus, und durch die hohe Drehgeschwindigkeit des Zerstäubertellers wird das Wasser radial zerstäubt.

Meldet der Sensor das Erreichen des Sollwerts für die relative Feuchte, schaltet das Magnetventil die Wasserzufuhr ab, und es kommt zum sofortigen Abbruch der Nebelerzeugung. Ein Übersteuern der Sollfeuchte - wie dies von Dampfzylindersystemen bekannt ist - wird dadurch wirksam verhindert. Kurz nach dem Abschalten der Wasserzufuhr wird auch der Elektromotor 134 von der Spannung getrennt und kommt zum Stillstand. Dieser Vorgang wiederholt sich, sobald der Sensor wiederum meldet, dass Feuchte benötigt wird. Der Nebel steht daher - abgesehen von der kurzen Anlaufzeit - sofort zur Verfügung und kann auch prompt gestoppt werden.

Der in den Figuren gezeigte Zerstäuberteller 106 ist - wie alle anderen Komponenten mit Ausnahme des Gehäuses 110 und der ersten Bundbuchse 120 - aus Edelstahl (1.4305) gefertigt und weist einen Durchmesser von 45 mm auf.

Bei einer Drehzahl von 25.000 U/min wird der Volumenstrom des zugeführten Frischwassers vorzugsweise auf einen Bereich von 64 ml/min bis 182 ml/min eingestellt. Dadurch werden Wassertröpfchen in der Größe von 35 µm bis 47 µm zerstäubt.

Bei einer Drehzahl von 45.000 U/min wird der Volumenstrom vorzugsweise auf 39 ml/min bis 128 ml/min eingestellt. Dadurch werden Wassertröpfchen in der Größe von 18 µm bis 26 µm zerstäubt.

Die vorstehend genannten Durchmesser der Wassertröpfchen sind für die Verwendung in Gärschränken besonders geeignet. Für andere Anwendungen können andere Tröpfchengrößen bevorzugt sein. Es obliegt dem Fachmann, den Durchmesser, die Geometrie und die Drehzahl der erfindungsgemäßen Vorrichtung so zu wählen, dass eine für den jeweiligen Bedarf geeignete Tröpfchengröße der zu zerstäubenden Flüssigkeit zu erzeugen.

Selbstverständlich können durch Variation des Durchmessers und/oder der Drehzahl und/oder des Volumenstroms des zugeführten Frischwassers auch andere Tröpfchengrößen realisiert werden. Wird der Durchmesser des Zerstäubertellers beispielsweise auf 80 mm erhöht, wird bei gleicher Drehzahl im Vergleich zu einem Zerstäuberteller mit 45 mm Durchmesser eine deutlich höhere Umfangsgeschwindigkeit erreicht. Da die Umfangsgeschwindigkeit maßgeblich für die erzeugte Tröpfchengröße ist, versteht sich, dass die Drehzahl bei einem Zerstäuberteller mit 80 mm Durchmesser gegenüber einem Zerstäuberteller mit 45 mm Durchmesser gesenkt werden kann, um die gleiche Tröpfchengröße zu erzeugen.

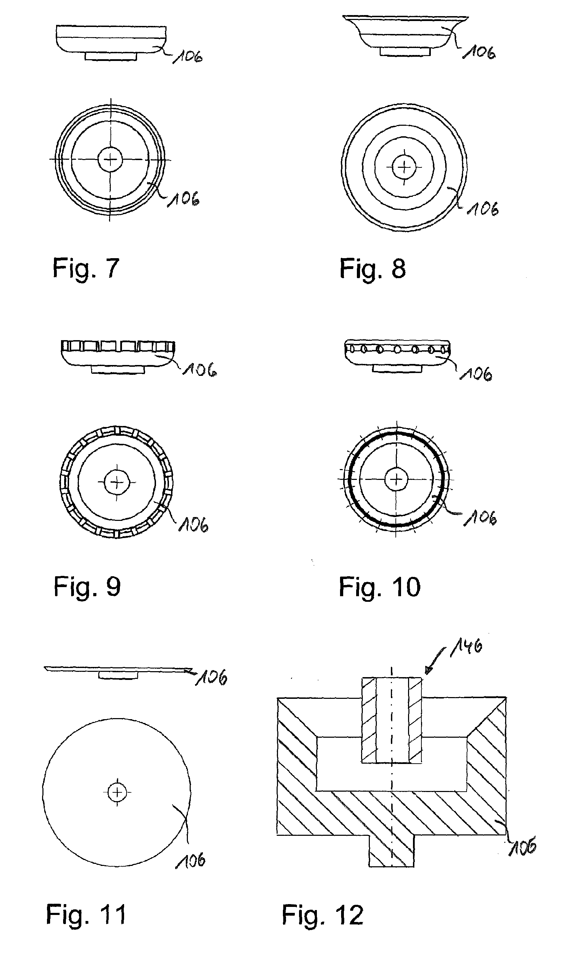

Die Figuren 7 bis 11 zeigen verschiedene Geometrien von Zerstäubertellern 106 jeweils in einer Seitenansicht (obere Darstellung) und einer Ansicht von oben (untere Darstellung).

Figuren 7 und 8 zeigen rotationssymmetrische glockenförmige Zerstäuberteller 106, wobei der in Figur 7 gezeigte Zerstäuberteller 106 eine Außenkante aufweist, die im Wesentlichen parallel zur Rotationsachse verläuft. Dagegen weist der Zerstäuberteller 106 aus Figur 8 eine sich in radial erstreckende Außenkante auf. Der Zerstäuberteller aus Figur 8 eignet sich insbesondere für Flüssigkeiten mit höherer Viskosität.

Figuren 9 und 10 zeigen Zerstäuberteller 106 mit schlitzförmigen Ausnehmungen bzw. kreisförmigen Öffnungen in den seitlichen Begrenzungswänden. Mit derartigen Geometrien kann die Dichte bzw. Intensität der zerstäubten Flüssigkeit im Wesentlichen unabhängig von der Tropfengröße beeinflusst werden.

Figur 11 zeigt eine sehr einfache Form eines Zerstäubertellers 106 mit ebener Oberfläche. Auch eine solche Form ist für die erfindungsgemäße Vorrichtung 100 geeignet.

Figur 12 zeigt eine schematische Darstellung eines Zerstäubungselements 106 mit einer Zufuhreinrichtung 146 zur Versorgung des Zerstäubungselements mit Flüssigkeit von der Vorderseite aus in einer Schnittdarstellung.

Bei der Zufuhreinrichtung 146 kann es sich beispielsweise um einen Schlauch handeln, mit welchem Wasser von vorne (in der Darstellung von oben) auf das Zerstäubungselement aufgebracht wird. Der Antrieb des Zerstäubungselements 106 kann in diesem Fall beispielsweise über die Rückseite (in der Darstellung von unten) erfolgen.

Die in den Figuren 1 bis 12 gezeigten Elemente lassen sich alle beliebig miteinander kombinieren. Insbesondere ist es möglich, jede Geometrie eines Zerstäubungstellers 106 mit einer Flüssigkeitszufuhr von der Rückseite aus (Drehdurchführung) oder von der Vorderseite aus zu realisieren.

### Bezugszeichenliste

- 100: erfindungsgemäße Vorrichtung
- 102: Rückwand
- 104: Rotationsvorrichtung
- 106: Zerstäuberteller
- 108: Hohlwelle / Flüssigkeitsdurchführung
- 110: Gehäuse
- 112: Riemenscheibe (abtriebseitig)
- 114: Drehdurchführung
- 116: Wasserschlauch
- 118: Wälzlager
- 120: erste Bundbuchse
- 122: Dichtbuchse
- 124: zweite Bundbuchse
- 126: Bundbolzen
- 128: Lagerelement
- 130: Lagerelement
- 132: wendelförmige Einkerbung
- 134: Elektromotor
- 135: Riemenscheibe (antriebseitig)
- 136: Stufe
- 138: Abdeckung
- 140: Heizspirale
- 142: Querstromgebläse
- 144: seitliche Öffnung
- 146: Zufuhreinrichtung

## Patentansprüche

1. Vorrichtung zur Behandlung von Lebensmitteln (100), umfassend eine mindestens teilweise im Innenraum der Vorrichtung (100) angeordnete Rotationsvorrichtung (104) mit einem Zerstäubungselement zur mechanischen Zerstäubung von Flüssigkeiten, **dadurch gekennzeichnet, dass**
das Zerstäubungselement derart ausgebildet ist, dass eine dem Zerstäubungselement zugeführte Flüssigkeit aufgrund der Rotation des Zerstäubungselements mechanisch zerstäubt wird und die gewünschte Zerstäubung durch die Wahl einer adäquaten Drehgeschwindigkeit des Zerstäubungselements einstellbar ist.

2. Vorrichtung zur Behandlung von Lebensmitteln (100) nach Anspruch 1, **dadurch gekennzeichnet, dass** die Rotationsvorrichtung (104) innerhalb der Vorrichtung beweglich gelagert ist.

3. Vorrichtung zur Behandlung von Lebensmitteln (100) nach einem der vorstehenden Ansprüche, **dadurch gekennzeichnet, dass** das Zerstäubungselement rotationssymmetrisch ist.

4. Vorrichtung zur Behandlung von Lebensmitteln (100) nach einem der vorstehenden Ansprüche, **dadurch gekennzeichnet, dass** das Zerstäubungselement ein Zerstäuberteller mit mindestens einer im Wesentlichen ebenen Oberfläche ist oder ein glockenförmig ausgebildeter Zerstäuberteller (106) ist.

5. Vorrichtung zur Behandlung von Lebensmitteln (100) nach einem der vorstehenden Ansprüche, **dadurch gekennzeichnet, dass** das Zerstäubungselement direkt von einem Motor, insbesondere einem Elektromotor angetrieben ist.

6. Vorrichtung zur Behandlung von Lebensmitteln (100) nach einem der vorstehenden Ansprüche, **dadurch gekennzeichnet, dass** eine Zufuhreinrichtung (146) zur Versorgung des Zerstäubungselements mit Flüssigkeit auf Vorderseite des Zerstäubungselements vorgesehen ist.

7. Vorrichtung zur Behandlung von Lebensmitteln (100) nach einem der vorstehenden Ansprüche, **dadurch gekennzeichnet, dass** das Zerstäubungselement im Bereich der Rotationsachse eine Öffnung für eine Flüssigkeitsdurchführung (108) aufweist, um dem Zerstäubungselement Flüssigkeit von dessen Rückseite aus zuführen zu können.

8. Vorrichtung zur Behandlung von Lebensmitteln (100) nach einem der vorstehenden Ansprüche, **dadurch gekennzeichnet, dass** die Rotationsvorrichtung (104) eine separate Drehdurchführung (114) mit einem ersten Kupplungsbereich zum Anschluss der Flüssigkeitsdurchführung (108) sowie einem zweiten Kupplungsbereich zum Anschluss einer externen Flüssigkeitsleitung, insbesondere einer Wasserleitung, aufweist.

9. Vorrichtung zur Behandlung von Lebensmitteln (100) nach Anspruch 5, **dadurch gekennzeichnet, dass** die Drehdurchführung (114) mindestens eines, vorzugsweise alle, der folgenden Merkmale aufweist:
a) eine Spaltdichtung,
b) Stufe (136) in Form einer radialen Durchmesserdifferenz gegenüber der Flüssigkeitsdurchführung (108),
c) eine archimedische Schnecke.

10. Vorrichtung zur Behandlung von Lebensmitteln (100) nach einem der vorstehenden Ansprüche, **dadurch gekennzeichnet, dass** die Rotationsvorrichtung (104) ein antreibbares Element, insbesondere eine Riemenscheibe (112) und/oder eine im Bereich der Rotationsachse angeordnete Antriebswelle, umfasst.

11. Vorrichtung zur Behandlung von Lebensmitteln (100) nach einem der vorstehenden Ansprüche, **dadurch gekennzeichnet, dass** die Rotationsvorrichtung (104) mit einer Gehäusewand der Vorrichtung zur Behandlung von Lebensmitteln (100) formschlüssig, kraftschlüssig oder stoffschlüssig verbunden ist.

12. Vorrichtung zur Behandlung von Lebensmitteln (100) nach einem der vorstehenden Ansprüche, **dadurch gekennzeichnet, dass** das Zerstäubungselement auf der Innenseite des Gärschranks (100) nahe der Rückwand (102) derart angeordnet ist und dass die Rotationsachse des Zerstäubungselements horizontal verläuft.

13. Verfahren zum Betreiben einer Vorrichtung zur Behandlung von Lebensmitteln (100) nach einem der vorstehenden Ansprüche, **dadurch gekennzeichnet, dass** die Rotationsgeschwindigkeit des Zerstäubungselements, die Temperatur in der Vorrichtung und die Flüssigkeitszufuhr so eingestellt werden, dass die mit der Rotationsvorrichtung (104) erzeugte mittlere Tröpfchengröße 20 bis 40 µm, insbesondere 25 bis 35µm beträgt.
